# EUROPEAN PATENT APPLICATION

(11) **EP 4 693 843 A1**
(43) Date of publication of application: **11.02.2026**
(21) Application number: 23931989.0
(22) Date of filing: 05.04.2023
(51) Int. Cl.: H02K 11/33, B62D 5/04

(54) **DRIVE DEVICE AND ELECTRIC POWER STEERING DEVICE**

(71) Applicant: Mitsubishi Electric Mobility Corporation, Tokyo 100-8310 (JP)
(72) Inventor: NAGAO Takashi, Tokyo 100-8310 (JP); SAITO Masatoshi, Tokyo 100-8310 (JP); ARAKI Rei, Tokyo 100-8310 (JP); FUJIKI Hiroyuki, Tokyo 100-8310 (JP); MIYOTA Shusuke, Tokyo 100-8310 (JP)
(74) Representative: Hoffmann Eitle
(86) International application number: PCT/JP2023/014024
(87) International publication number: WO 2024/209577

(57) **Abstract**

A drive device according to the present disclosure includes: a motor including a rotary shaft, a rotor fixed to the rotary shaft, and a winding configured to rotate the rotor around a motor axis by a current flowing through the winding; and a control unit attached to the motor and configured to control a current to be supplied to the winding, in which the control unit includes an inverter circuit including a plurality of switching elements and configured to supply a current to the winding, a rotation sensor configured to determine a rotation angle of the rotary shaft, and a wiring board on which the inverter circuit and the rotation sensor are mounted, and in a planar view, the rotation sensor is disposed in a position overlapping the motor axis and the plurality of switching elements are disposed along an outer peripheral edge of the wiring board.

## Description

### Technical Field

The present disclosure relates to a drive device and an electric power steering device.

### Background Art

Patent Document 1 discloses a drive device including a motor and an inverter circuit that controls driving of the motor. **In** addition, the drive device includes a rotation sensor that determines the rotation angle of a rotary shaft of the motor. The inverter circuit and the rotation sensor are mounted on a wiring board.

### Citation List

### Patent Documents

Patent Document 1: Japanese Patent No. 7167635

### Summary of Invention

### Problem to be Solved by the Invention

In Patent Document 1, in the wiring board, a switching element of the inverter circuit is disposed to be close to the rotation sensor. Therefore, the rotation sensor is likely to be affected by noise such as magnetic noise generated from the switching element.

In consideration of the above circumstances, an object of the present disclosure is to provide a drive device and an electric power steering device capable of reducing the influence of noise generated from a switching element of an inverter circuit on a rotation sensor.

### Means to Solve the Problem

One aspect of a drive device according to the present disclosure includes: a motor including a rotary shaft, a rotor fixed to the rotary shaft, and a winding configured to rotate the rotor around a motor axis by a current flowing through the winding; and a control unit attached to the motor and configured to control a current to be supplied to the winding, in which the control unit includes an inverter circuit including a plurality of switching elements and configured to supply a current to the winding, a rotation sensor configured to determine a rotation angle of the rotary shaft, and a wiring board on which the inverter circuit and the rotation sensor are mounted, and in a planar view, the rotation sensor is disposed in a position overlapping the motor axis and the plurality of switching elements are disposed along an outer peripheral edge of the wiring board.

One aspect of an electric power steering device according to the present disclosure includes the drive device.

### Effects of the Invention

According to the present disclosure, it is possible to provide a drive device and an electric power steering device capable of reducing the influence of noise generated from a switching element of an inverter circuit on a rotation sensor.

### Brief Description of Drawings

[FIG. 1] A circuit diagram of a drive device and an electric power steering device according to Embodiment 1.
[FIG. 2] A cross-sectional view showing a configuration of the drive device and the electric power steering device according to Embodiment 1.
[FIG. 3] A planar view of a wiring board according to Embodiment 1.
[FIG. 4] A circuit diagram of a drive device and an electric power steering device according to Embodiment 2.
[FIG. 5] A planar view of a wiring board according to Embodiment 2.
[FIG. 6] A planar view of a wiring board according to Embodiment 3. Description of Embodiments

Hereinafter, embodiments of the present disclosure will be described with reference to the drawings. The scope of the present disclosure is not limited to the following embodiments, and configurations can be arbitrary changed within the scope of the present disclosure.

### Embodiment 1.

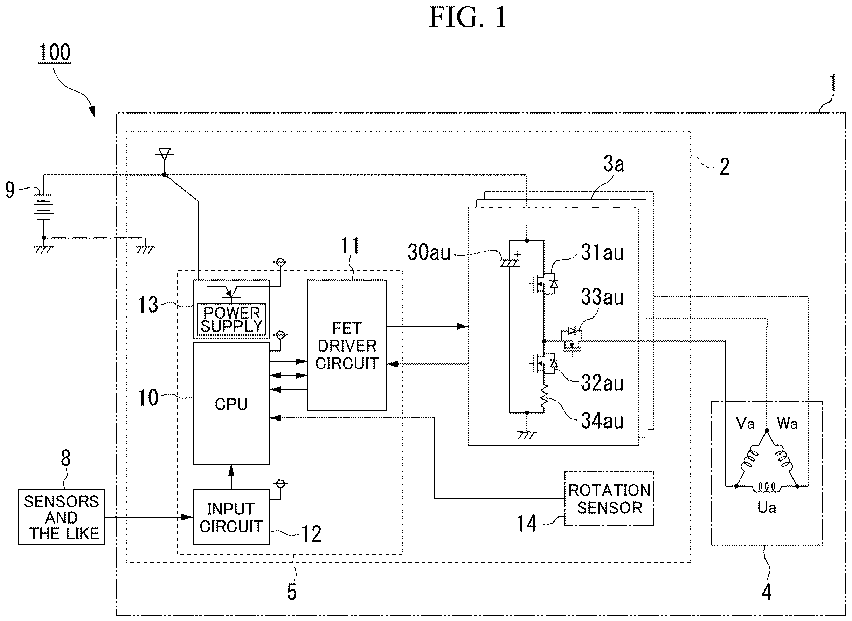

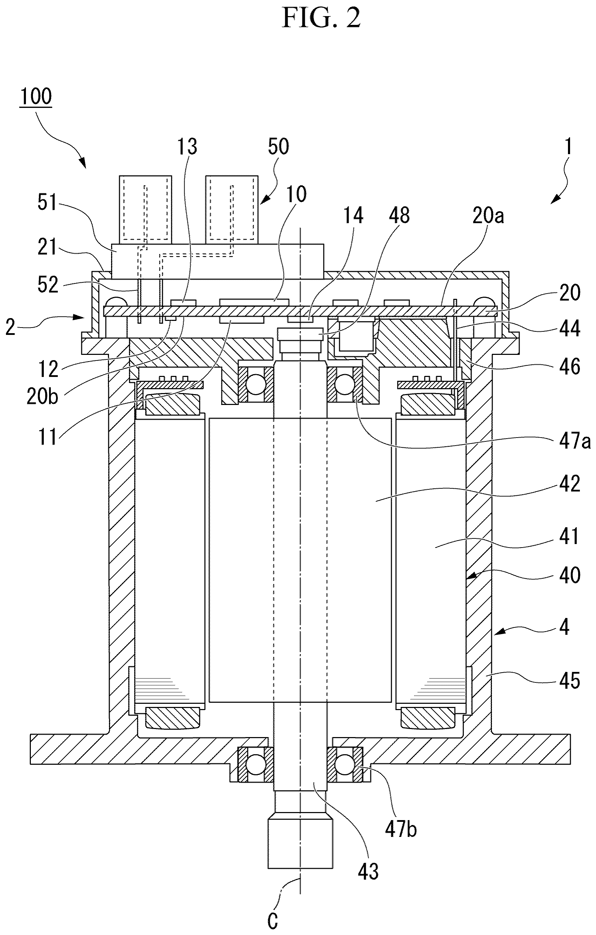

FIG. 1 is a circuit diagram of a drive device 1 and an electric power steering device 100 in Embodiment 1. FIG. 2 is a cross-sectional view of the drive device 1.

As shown in FIG. 1, the drive device 1 includes a control unit 2 and a motor 4. The electric power steering device 100 is configured to use torque generated by the motor 4 as assist torque for steering a vehicle. Although detailed descriptions will be omitted, a rotary shaft 43 of the motor 4 is connected to a steering system of the vehicle through a reducer or the like.

As shown in FIG. 1, the control unit 2 includes an inverter circuit 3a, a control circuit 5, a rotation sensor 14, and the like. The control circuit 5 includes a CPU 10, a FET driver circuit 11 (pre-driver), an input circuit 12, a power supply circuit 13, and the like.

As shown in FIG. 2, the control unit 2 includes a wiring board 20. The inverter circuit 3a, the control circuit 5, the rotation sensor 14, and the like are mounted on the wiring board 20. The wiring board 20 includes a first surface 20a and a second surface 20b. The wiring board 20 is covered with a cover 21.

As shown in FIG. 2, the motor 4 includes a motor main body 40, a frame 45, a housing 46, a terminal group 44, and the like. For example, a permanent magnet synchronous motor may be employed as the motor 4. The motor 4 according to the present embodiment is a three-phase brushless motor. Three phases are a U phase, a V phase, and a W phase.

The motor main body 40 includes a stator 41, a rotor 42, and the rotary shaft 43. The stator 41 includes three-phase windings (three-phase coils, first three-phase windings). In FIG. 1, the three-phase windings are represented by reference signs Ua, Va, and Wa. The three-phase windings Ua, Va, and Wa are delta-connected. The three-phase windings Ua, Va, and Wa may be star-connected. The rotor 42 is fixed to the rotary shaft 43. The rotary shaft 43 rotates with respect to the stator 41 around a motor axis C.

### (Definition of Direction)

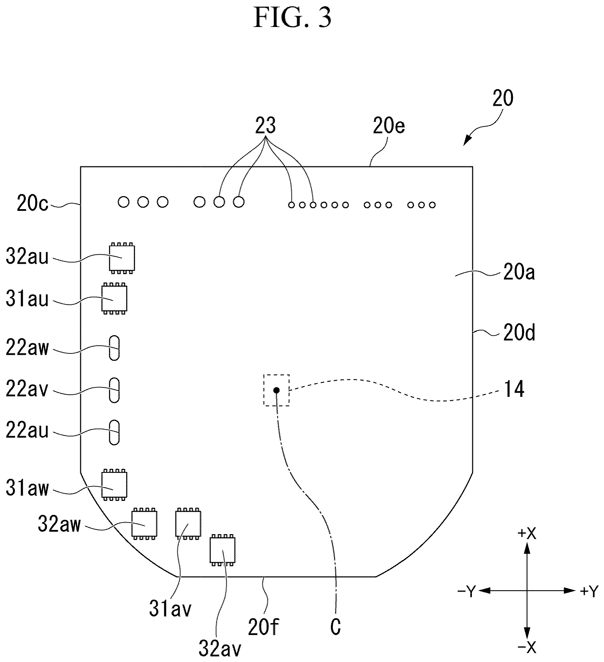

In the present specification, a direction along the motor axis C is referred to as an axial direction. The axial direction is also parallel with a thickness direction of the wiring board 20. As shown in FIG. 2, the wiring board 20 and the rotor 42 are disposed side by side in the axial direction. **In** the axial direction, a side on which the wiring board 20 is disposed is referred to as an upper side, and a side on which the rotor 42 is disposed is referred to as a lower side. The wiring board 20 extends to intersect (to be substantially orthogonal to) the axial direction. **In** the wiring board 20, the first surface 20a is a surface facing upward, and the second surface 20b is a surface facing downward. That is, the first surface 20a faces the cover 21, and the second surface 20b faces the rotor 42. A case where viewing in the axial direction is referred to as a planar view. A view as viewed in the axial direction is referred to as a planar view. The axial direction may not be parallel with the vertical direction. One direction orthogonal to the axial direction is referred to as a first orthogonal direction X (see FIG. 3 and the like). A direction orthogonal to both the axial direction and the first orthogonal direction X is referred to as a second orthogonal direction Y (see FIG. 3 and the like).

As shown in FIG. 3, the wiring board 20 has a substantially rectangular shape in a planar view and includes a first side edge 20c, a second side edge 20d, a third side edge 20e, and a fourth side edge 20f. The first side edge 20c, the second side edge 20d, the third side edge 20e, and the fourth side edge 20f are outer peripheral edges of the wiring board 20. The first side edge 20c and the second side edge 20d are parallel with the first orthogonal direction X. The third side edge 20e is parallel with the second orthogonal direction Y. The fourth side edge 20f includes a central edge portion parallel with the second orthogonal direction Y, and connection edge portions that are a pair and connect the central edge portion to the first side edge 20c and the central edge portion to the second side edge 20d. In the first orthogonal direction X, a side close to the third side edge 20e is referred to as a +X side, and a side close to the fourth side edge 20f is referred to as a -X side. In the second orthogonal direction Y, a side close to the second side edge 20d is referred to as a +Y side, and a side close to the first side edge 20c is referred to as a -Y side.

As shown in FIG. 2, the frame 45 has a tubular shape. The motor main body 40 is accommodated inside the frame 45. A through-hole is provided at a center of a bottom portion of the frame 45, and a lower bearing 47b is fixed inside the through-hole. A lower end portion of the rotary shaft 43 is inserted into the lower bearing 47b.

The housing 46 is provided on an upper portion of the motor 4. The housing 46 is fitted inside an upper end portion of the tubular frame 45. The housing 46 prevents foreign matter from intruding into the inside of the motor 4. A through-hole is provided in a center of the housing 46, and an upper bearing 47a is fixed inside the through-hole. An upper end portion of the rotary shaft 43 is inserted into the upper bearing 47a.

The upper bearing 47a and the lower bearing 47b hold the rotary shaft 43 such that the rotary shaft 43 can smoothly rotate.
A sensor magnet 48 is attached to the upper end of the rotary shaft 43. The sensor magnet 48 has, at least, one or more N pole and one or more S pole.

The wiring board 20 is disposed above the housing 46. The stator 41 (three-phase windings Ua, Va, and Wa) is disposed below the housing 46. The terminal group 44 electrically connects the wiring board 20 and the three-phase windings Ua, Va, and Wa. Specifically, the housing 46 is provided with a through-hole extending in the axial direction. The terminal group 44 is inserted into the through-hole of the housing 46. The terminal group 44 includes three first terminals corresponding to the three-phase windings Ua, Va, and Wa.

As shown in FIG. 3, the wiring board 20 is provided with three current supply holes 22au, 22av, and 22aw (first current supply holes in three phases) corresponding to the U phase, the V phase, and the W phase. The three current supply holes 22au, 22av, and 22aw are disposed in an outer peripheral portion of the wiring board 20. In a planar view, the three current supply holes 22au, 22av, and 22aw are disposed along the first side edge 20c (the outer peripheral edge of the wiring board 20). The three current supply holes 22au, 22av, and 22aw are arranged in the first orthogonal direction X.

The first terminal in the U phase corresponding to the winding Ua is inserted into the current supply hole 22au in the U phase. The first terminal in the V phase corresponding to the winding Va is inserted into the current supply hole 22av in the V phase. The first terminal in the W phase corresponding to the winding Wa is inserted into the current supply hole 22aw in the W phase. A current is supplied from the inverter circuit 3a of the wiring board 20 to the three-phase windings Ua, Va, and Wa through the three current supply holes 22au, 22av, and 22aw and the three first terminals. As a result, the rotary shaft 43 is rotated. The three first terminals may be end portions of the three-phase windings Ua, Va, and Wa or may be relay members electrically connected to the end portions of the three-phase windings Ua, Va, and Wa.

The rotation sensor 14 determines the rotation angle of the rotary shaft 43. For the rotation sensor 14, a magnetoresistance (MR) sensor may be used. The rotation sensor 14 determines the rotation angle of the rotary shaft 43 by detecting a magnetic field generated by the sensor magnet 48. The rotation sensor 14 is disposed to face the sensor magnet 48. More specifically, as shown in FIG. 2, the rotation sensor 14 is mounted on the second surface 20b of the wiring board 20. In addition, the rotation sensor 14 is disposed in a position overlapping the sensor magnet 48 in a planar view. By disposing the rotation sensor 14 in this way, the determination accuracy of the rotation sensor 14 for the rotation angle is increased, and controllability of the control unit 2 for the motor 4 can be improved. However, the rotation sensor 14 may be disposed on the first surface 20a of the wiring board 20 as long as the desired determination accuracy can be obtained.

As shown in FIG. 2, a connector assembly 50 is disposed above the cover 21. The connector assembly 50 is a component in which a connector, a metal bus bar, a terminal, and the like are integrally formed with a holding member 51 that holds the connector, the metal bus bar, the terminal, and the like. The holding member 51 is made of, for example, a resin. The connector assembly 50 connects a power supply line and a ground line, which are required for controlling and driving the motor 4, to the wiring board 20. In addition, the connector assembly 50 connects a signal transmission line for transmitting signals such as a torque sensor signal and a vehicle communication signal to the wiring board 20. The connector assembly 50 may electrically connect the power supply line, the ground line, the signal transmission line, and the like to the control unit 2 all together. Alternatively, a connector other than the connector assembly 50 may be provided for connection of the power supply line, the ground line, and the like.

The connector assembly 50 includes a plurality of connector terminals 52 extending downward from the holding member 51. The plurality of connector terminals 52 are inserted into a plurality of connector through-holes 23 (see FIG. 3) provided in the wiring board 20. In addition, each connector terminal 52 is electrically connected to a circuit pattern formed on the wiring board 20.

The wiring board 20 is fixed to the housing 46 by screws or the like. The wiring board 20 may be fixed to the cover 21, the connector assembly 50, or the like.

Next, an outline of an operation of each part of the control unit 2 will be described.

The power supply circuit 13 generates a power supply voltage for normally operating various electronic components (the CPU 10, the FET driver circuit 11, the input circuit 12, the rotation sensor 14, and the like) constituting the control unit 2 by using electric power supplied from a battery 9 (power supply).

The input circuit 12 inputs, to the CPU 10, various types of information received by the control unit 2 from sensors 8 and the like, the rotation sensor 14, and the like. Although detailed illustration is omitted, the input circuit 12 includes a torque sensor interface circuit and a vehicle communication interface circuit. The torque sensor interface circuit is a circuit for determining steering torque of a driver in the electric power steering device 100 and acquiring information on the steering torque. The vehicle communication interface circuit is a circuit for receiving various types of information from a vehicle system.

The CPU 10 calculates a control amount for supplying electric power to the motor 4 based on the various types of information and the like input from the input circuit 12. The FET driver circuit 11 drives the inverter circuit 3a based on calculation results of the CPU 10.

The inverter circuit 3a supplies electric power to the three-phase windings Ua, Va, and Wa of the motor 4 based on the calculation results of the CPU 10. The inverter circuit 3a includes three upper arms and three lower arms corresponding to the U phase, the V phase, and the W phase. In the inverter circuit 3a, circuit configurations for the U phase, the V phase, and the W phase are the same. Therefore, in the following, the U phase will be described by representing these three phases. That is, the following descriptions are similarly applied to the V phase and the W phase. In addition, in FIG. 1, among the constituent elements of the inverter circuit 3a, the constituent elements corresponding to the U phase are shown. However, in practice, the inverter circuit 3a also have constituent elements corresponding to the V phase and the W phase. That is, in FIG. 1, the constituent elements corresponding to the V phase and the W phase, which are included in the inverter circuit 3a, are omitted.

As shown in FIG. 1, the inverter circuit 3a includes a smoothing capacitor 30au, an upper arm-side switching element 31au, a lower arm-side switching element 32au, a motor relay switching element 33au, and a shunt resistor 34au. The upper arm-side switching element 31au is disposed in the upper arm, and the lower arm-side switching element 32au is disposed in the lower arm. The upper arm-side switching element 31au is electrically connected to a positive electrode of the battery 9, and the lower arm-side switching element 32au is electrically connected to a negative electrode of the battery 9. The upper arm-side switching element 31au and the lower arm-side switching element 32au are connected in series. The motor relay switching element 33au is connected between the upper arm-side switching element 31au and the lower arm-side switching element 32au. The motor relay switching element 33au has a relay function. That is, the motor relay switching element 33au switches power supply, which is from a portion between the upper arm-side switching element 31au and the lower arm-side switching element 32au toward the winding Ua of the motor 4, between on and off. The upper arm-side switching element 31au and the lower arm-side switching element 32au are operated by the FET driver circuit **11** based on the calculation results of the CPU 10. As an example of the upper arm-side switching element 31au, the lower arm-side switching element 32au, and the motor relay switching element 33au, a field effect transistor (FET) may be employed. The motor relay switching element 33au may be omitted.

The smoothing capacitor 30au is connected to the vicinity of the upper arm-side switching element 31au and the lower arm-side switching element 32au. The smoothing capacitor 30au has a function of reducing a power supply voltage fluctuation and noise during switching. The shunt resistor 34au is connected between the lower arm-side switching element 32au and ground. The shunt resistor 34au is used to detect a drive current flowing through the winding Ua of the motor 4.

The inverter circuit 3a may include a choke coil that reduces release of noise to the outside of the drive device 1 and reduces inflow of noise to the inside of the drive device 1.

Next, disposition of each constituent element included in the drive device 1 will be described.

As shown in FIG. 2, the CPU 10, the FET driver circuit 11, the input circuit 12, and the power supply circuit 13 of the control circuit 5 are mounted on the wiring board 20. The CPU 10 and the power supply circuit 13 are mounted on the first surface 20a of the wiring board 20. The FET driver circuit 11 and the input circuit 12 are mounted on the second surface 20b of the wiring board 20. The CPU 10 may be mounted on the second surface 20b. The power supply circuit 13 may be mounted on the second surface 20b. The FET driver circuit 11 may be mounted on the first surface 20a. The input circuit 12 may be mounted on the first surface 20a.

FIG. 3 is a planar view showing a schematic shape of the wiring board 20 and disposition of components mounted on the wiring board 20. FIG. 3 is a view of the wiring board 20 as viewed from the first surface 20a. The components mounted on the first surface 20a are shown by solid lines, and the components mounted on the second surface 20b are shown by broken lines. In FIG. 3, configurations of the control circuit 5 are not shown.

On the first surface 20a of the wiring board 20, three upper arm-side switching elements 31au, 31av, and 31aw and three lower arm-side switching elements 32au, 32av, and 32aw corresponding to the U phase, the V phase, and the W phase are mounted. The upper arm-side switching elements 31au, 31av, and 31aw and the lower arm-side switching elements 32au, 32av, and 32aw are disposed in the outer peripheral portion of the wiring board 20. In a planar view, the upper arm-side switching elements 31au, 31av, and 31aw and the lower arm-side switching elements 32au, 32av, and 32aw are disposed along the first side edge 20c and the fourth side edge 20f (the outer peripheral edges of the wiring board 20).

The rotation sensor 14 is mounted on the second surface 20b of the wiring board 20. The rotation sensor 14 is disposed in a central portion of the wiring board 20. In a planar view, the rotation sensor 14 is disposed in a position overlapping the motor axis C.

That is, the upper arm-side switching elements 31au, 31av, and 31aw and the lower arm-side switching elements 32au, 32av, and 32aw are disposed to be away from the rotation sensor 14.

In a case where the motor relay switching element is provided, the motor relay switching element is mounted on the first surface 20a of the wiring board 20. For example, the motor relay switching element may be disposed between the rotation sensor 14 and the current supply holes 22au, 22av, and 22aw. It is preferable that the motor relay switching element be disposed at a position close to the current supply holes 22au, 22av, and 22aw.

As described above, the drive device 1 according to the present embodiment includes the motor 4 including the rotary shaft 43, the rotor 42 fixed to the rotary shaft 43, and the three-phase windings Ua, Va, and Wa configured to rotate the rotor 42 around the motor axis C by a current flowing therethrough, and the control unit 2 attached to the motor 4 and configured to control a current to be supplied to the three-phase windings Ua, Va, and Wa. The control unit 2 includes the inverter circuit 3a including the plurality of switching elements 31au, 31av, 31aw, 32au, 32av, and 32aw and configured to supply a current to the three-phase windings Ua, Va, and Wa, the rotation sensor 14 configured to determine the rotation angle of the rotary shaft 43, and the wiring board 20 on which the inverter circuit 3a and the rotation sensor 14 are mounted. In a planar view, the rotation sensor 14 is disposed in the position overlapping the motor axis C and the plurality of switching elements 31au, 31av, 31aw, 32au, 32av, and 32aw are disposed along the outer peripheral edge of the wiring board 20.

In addition, the electric power steering device 100 according to the present embodiment includes the drive device 1.

With such a configuration, the switching elements 31au, 31av, 31aw, 32au, 32av, and 32aw can be disposed to be away from the rotation sensor 14. Therefore, it is possible to reduce the influence of the noise generated from the switching elements 31au, 31av, 31aw, 32au, 32av, and 32aw of the inverter circuit 3a on the rotation sensor 14.

In addition, the control unit 2 further includes the FET driver circuit 11 configured to output a signal to drive the inverter circuit 3a, the input circuit 12 to which a signal is input from the outside, the CPU 10 configured to control the FET driver circuit 11 based on the signal from the input circuit 12, and the power supply circuit 13 configured to supply the power supply voltage to the FET driver circuit 11, the input circuit 12, and the CPU 10. The FET driver circuit 11, the input circuit 12, the CPU 10, and the power supply circuit 13 are mounted on the wiring board 20.

Since the FET driver circuit 11, the input circuit 12, the CPU 10, and the power supply circuit 13 are also mounted on the wiring board 20 on which the inverter circuit 3a and the rotation sensor 14 are mounted, it is possible to reduce the size of the drive device 1.

### Embodiment 2.

Next, a drive device and an electric power steering device according to Embodiment 2 will be described. Since the basic configurations of the drive device and the electric power steering device according to the present embodiment are the same as those of the drive device and the electric power steering device according to Embodiment 1, points different therefrom will be mainly described.

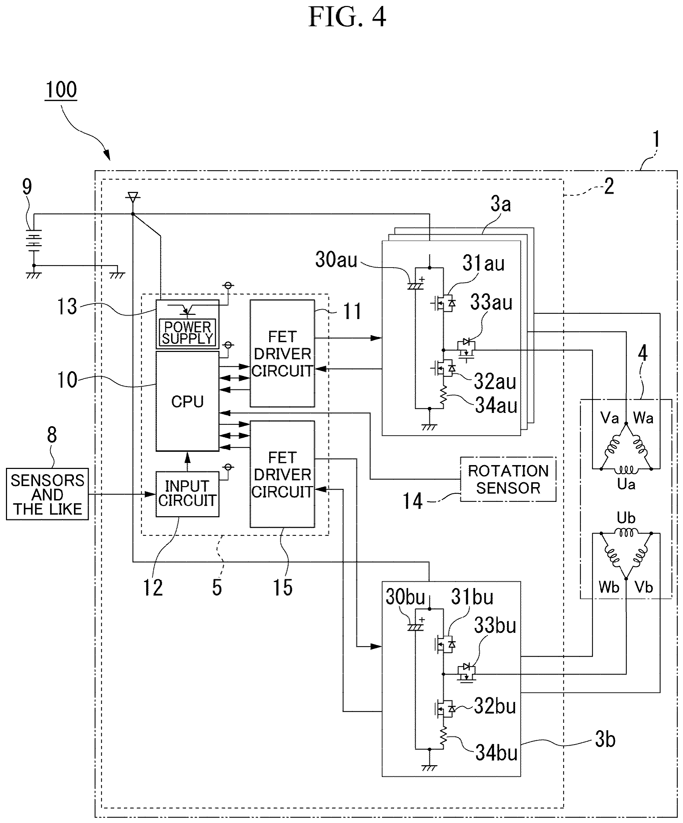

As shown in FIG. 4, in the present embodiment, the motor 4 includes two sets of three-phase windings (three-phase coils). Specifically, the motor 4 includes second three-phase windings Ub, Vb, and Wb in addition to the three-phase windings Ua, Va, and Wa. The second three-phase windings Ub, Vb, and Wb are delta-connected. The second three-phase windings Ub, Vb, and Wb may be star-connected. In addition, the drive device 1 further includes a second inverter circuit 3b that supplies electric power to the second three-phase windings Ub, Vb, and Wb, and a second FET driver circuit 15 (second pre-driver) that drives the second inverter circuit 3b. In the example of FIG. 4, each of the inverter circuit 3a and the second inverter circuit 3b is connected to the battery 9 and the ground. However, the second inverter circuit 3b may be connected to a battery and ground of a different system.

The terminal group 44 of the motor 4 includes three second terminals corresponding to the second three-phase windings Ub, Vb, and Wb, in addition to the three first terminals corresponding to the three-phase windings Ua, Va, and Wa.

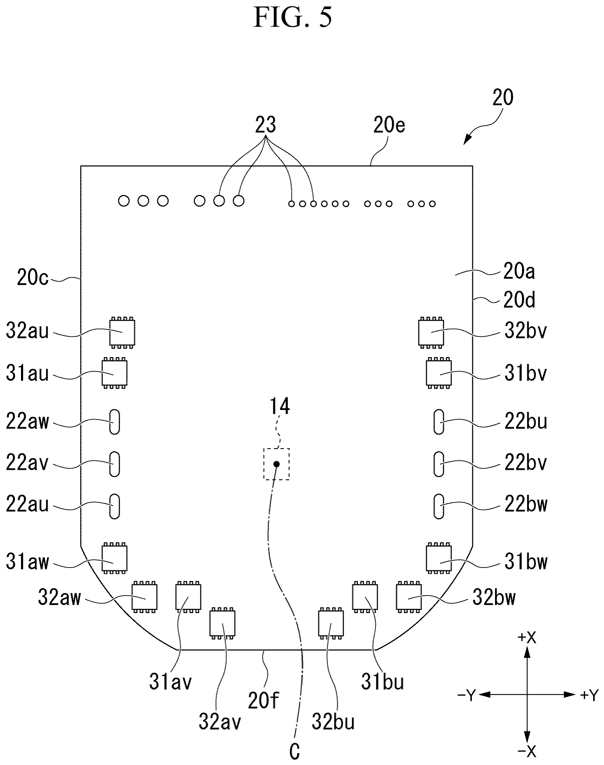

As shown in FIG. 5, the wiring board 20 is provided with three second current supply holes 22bu, 22bv, and 22bw (second current supply holes in three phases) corresponding to the U phase, the V phase, and the W phase, in addition to the three current supply holes 22au, 22av, and 22aw. The three second current supply holes 22bu, 22bv, and 22bw are disposed in the outer peripheral portion of the wiring board 20. In a planar view, the three second current supply holes 22bu, 22bv, and 22bw are disposed along the second side edge 20d (the outer peripheral edge of the wiring board 20). The three second current supply holes 22bu, 22bv, and 22bw are arranged in the first orthogonal direction X.

The second terminal in the U phase corresponding to the second winding Ub is inserted into the second current supply hole 22bu in the U phase. The second terminal in the V phase corresponding to the second winding Vb is inserted into the second current supply hole 22bv in the V phase. The second terminal in the W phase corresponding to the second winding Wb is inserted into the second current supply hole 22bw in the W phase. A current is supplied from the second inverter circuit 3b to the second three-phase windings Ub, Vb, and Wb through the three second current supply holes 22bu, 22bv, and 22bw and the three second terminals. As a result, the rotary shaft 43 is rotated. The three second terminals may be end portions of the second three-phase windings Ub, Vb, and Wb or may be relay members electrically connected to the end portions of the second three-phase windings Ub, Vb, and Wb.

In a planar view, the current supply holes 22au, 22av, and 22aw are disposed in order of the current supply hole 22au in the U phase, the current supply hole 22av in the V phase, and the current supply hole 22aw in the W phase toward the +X side (one side in the first orthogonal direction X). In a planar view, the three second current supply holes 22bu, 22bv, and 22bw are disposed in order of the second current supply hole 22bu in the U phase, the second current supply hole 22bv in the V phase, and the second current supply hole 22bw in the W phase toward the -X side (the other side in the first orthogonal direction X). In a planar view, the three current supply holes 22au, 22av, and 22aw and the three second current supply holes 22bu, 22bv, and 22bw are disposed such that the first current supply hole and the second current supply hole in a corresponding phase are disposed to be point symmetrical with respect to the motor axis C. More specifically, in a planar view, the current supply hole 22au and the second current supply hole 22bu in the U phase are disposed to be point symmetrical with respect to the motor axis C, the current supply hole 22av and the second current supply hole 22bv in the V phase are disposed to be point symmetrical with respect to the motor axis C, and the current supply hole 22aw and the second current supply hole 22bw in the W phase are disposed to be point symmetrical with respect to the motor axis C. In a planar view, as long as the first current supply hole and the second current supply hole in the corresponding phase are disposed to be point symmetrical with respect to the motor axis C, the order in which the current supply holes 22au, 22av, and 22aw are arranged toward the +X side is not limited to the order of the U phase, the V phase, and the W phase, and the order in which the second current supply holes 22bu, 22bv, and 22bw are arranged toward the -X side is not limited to the order of the U phase, the V phase, and the W phase.

The circuit configurations of the second inverter circuit 3b are the same as the circuit configurations of the inverter circuit 3a. That is, the second inverter circuit 3b includes three upper arms and three lower arms corresponding to the U phase, the V phase, and the W phase. In the second inverter circuit 3b, the circuit configurations for the U phase, the V phase, and the W phase are the same. The U phase will be described by representing the three phases. The second inverter circuit 3b includes a second smoothing capacitor 30bu, a second upper arm-side switching element 31bu, a second lower arm-side switching element 32bu, a second motor relay switching element 33bu, and a second shunt resistor 34bu. The second upper arm-side switching element 31bu is disposed in the upper arm, and the second lower arm-side switching element 32bu is disposed in the lower arm. The second upper arm-side switching element 31bu is electrically connected to the positive electrode of the battery 9, and the second lower arm-side switching element 32bu is electrically connected to the negative electrode of the battery 9. The second upper arm-side switching element 31bu and the second lower arm-side switching element 32bu are connected in series. The second motor relay switching element 33bu is connected between the second upper arm-side switching element 31bu and the second lower arm-side switching element 32bu. The second motor relay switching element 33bu has a relay function. That is, the second motor relay switching element 33bu switches the power supply, which is from a portion between the second upper arm-side switching element 31bu and the second lower arm-side switching element 32bu toward the winding Ub of the motor 4, between on and off. The second upper arm-side switching element 31bu and the second lower arm-side switching element 32bu are operated by the second FET driver circuit 15 based on the calculation results of the CPU 10. As an example of the second upper arm-side switching element 31bu, the second lower arm-side switching element 32bu, and the second motor relay switching element 33bu, a field effect transistor (FET) may be employed. The second motor relay switching element 33bu may be omitted.

The second smoothing capacitor 30bu is connected to the vicinity of the second upper arm-side switching element 31bu and the second lower arm-side switching element 32bu. The second smoothing capacitor 30bu has a function of reducing a power supply voltage fluctuation and noise during switching. The second shunt resistor 34bu is directly connected between the second lower arm-side switching element 32bu and the ground. The second shunt resistor 34bu is used to detect a drive current flowing through the second winding Ub of the motor 4.

The second inverter circuit 3b may include a choke coil that reduces release of noise to the outside of the drive device 1 and reduces inflow of noise to the inside of the drive device 1.

As shown in FIG. 5, on the first surface 20a of the wiring board 20, three second upper arm-side switching elements 31bu, 31bv, and 31bw and three second lower arm-side switching elements 32bu, 32bv, and 32bw corresponding to the U phase, the V phase, and the W phase are mounted. The three second upper arm-side switching elements 31bu, 31bv, and 31bw and the three second lower arm-side switching elements 32bu, 32bv, and 32bw are disposed in the outer peripheral portion of the wiring board 20. In a planar view, the three second upper arm-side switching elements 31bu, 31bv, and 31bw and the three second lower arm-side switching elements 32bu, 32bv, and 32bw are disposed along the second side edge 20d and the fourth side edge 20f (the outer peripheral edges of the wiring board 20). That is, the three second upper arm-side switching elements 31bu, 31bv, and 31bw and the three second lower arm-side switching elements 32bu, 32bv, and 32bw are disposed to be away from the rotation sensor 14.

As described above, in the present embodiment, the control unit 2 further includes the second inverter circuit 3b including the plurality of second switching elements 31bu, 31bv, 31bw, 32bu, 32bv, and 32bw and configured to supply a current to the motor 4 through a route different from the inverter circuit 3a. In a planar view, the plurality of second switching elements 31bu, 31bv, 31bw, 32bu, 32bv, and 32bw are disposed along the outer peripheral edge of the wiring board 20.

As a result, even in a case where a failure occurs in one inverter circuit, it is possible to continue driving the motor 4, and the redundancy of the system is obtained. In addition, the second switching elements 31bu, 31bv, 31bw, 32bu, 32bv, and 32bw can be disposed to be away from the rotation sensor 14. Therefore, it is possible to reduce the influence of the noise generated from the second switching elements 31bu, 31bv, 31bw, 32bu, 32bv, and 32bw of the second inverter circuit 3b on the rotation sensor 14.

In addition, the wiring board 20 includes the current supply holes 22au, 22av, and 22aw in three phases electrically connected to the three-phase windings Ua, Va, and Wa, and the second current supply holes 22bu, 22bv, and 22bw in three phases electrically connected to the second three-phase windings Ub, Vb, and Wb. In a planar view, the current supply holes 22au, 22av, and 22aw in three phases and the second current supply holes 22bu, 22bv, and 22bw in three phases are provided such that the first current supply hole and the second current supply hole in a corresponding phase are disposed to be point symmetrical with respect to the motor axis C.

As a result, a magnetic field generated from wiring lines (for example, the first terminals) corresponding to the current supply holes 22au, 22av, and 22aw and a magnetic field generated from wiring lines (for example, the second terminals) corresponding to the second current supply holes 22bu, 22bv, and 22bw are canceled out by each other, and the influence of the magnetic fields on the rotation sensor 14 can be reduced.

In addition, in a planar view, the current supply holes 22au, 22av, and 22aw in three phases and the second current supply holes 22bu, 22bv, and 22bw in three phases are disposed along the outer peripheral edge of the wiring board 20.

As a result, the current supply holes 22au, 22av, and 22aw in three phases and the second current supply holes 22bu, 22bv, and 22bw in three phases can be disposed to be away from the rotation sensor 14. Therefore, it is possible to reduce the influence of the noise generated from the current supply holes 22au, 22av, and 22aw, the second current supply holes 22bu, 22bv, and 22bw, and the wiring lines corresponding thereto on the rotation sensor 14.

### Embodiment 3.

Next, a drive device and an electric power steering device according to Embodiment 3 will be described. Since the basic configurations of the drive device and the electric power steering device according to the present embodiment are the same as those of the drive device and the electric power steering device according to Embodiment 2, points different therefrom will be mainly described.

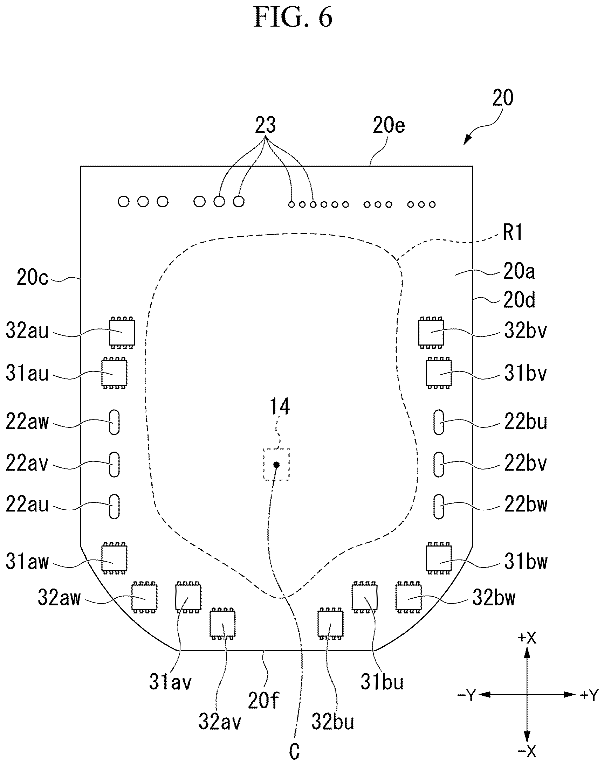

In the present embodiment, the FET driver circuit 11, the second FET driver circuit 15, the input circuit 12, the CPU 10, and the power supply circuit 13 of the control circuit 5 are disposed in a region R1 shown in FIG. 6 on the wiring board 20. The region R1 is a region surrounded by the switching elements 31au, 31av, 31aw, 32au, 32av, and 32aw of the inverter circuit 3a, the current supply holes 22au, 22av, and 22aw, the second switching elements 31bu, 31bv, 31bw, 32bu, 32bv, and 32bw of the second inverter circuit 3b, and the second current supply holes 22bu, 22bv, and 22bw in the wiring board 20.

Accordingly, the FET driver circuit 11, the second FET driver circuit 15, the input circuit 12, the CPU 10, and the power supply circuit 13 of the control circuit 5 can be disposed in the central portion of the wiring board 20, and the board area thereof can be effectively used.

The technical scope of the present disclosure is not limited to the embodiments described above, and various modifications can be made within the scope of the present disclosure.

For example, a switching element for a power supply relay and a switching element for a reverse connection protection relay that are connected in series may be provided between the battery 9 and the inverter circuit 3a. A parasitic diode of the switching element for a reverse connection protection relay is connected in a direction opposite to a parasitic diode of the switching element for a power supply relay. The switching element for a power supply relay switches between the supply and the cut-off of the current from the battery 9 to the inverter circuit 3a. The switching element for a reverse connection protection relay protects the inverter circuit 3a from a backflow of current in a case where the voltage (+B) of the battery 9 and the ground are erroneously connected in opposite order to each other when the battery 9 is mounted on the vehicle.

In addition, in this case, in Embodiments 2 and 3, a switching element for a power supply relay and a switching element for a reverse connection protection relay may be used in common for the inverter circuit 3a and the second inverter circuit 3b, or switching elements for a power supply relay and switching elements for a reverse connection protection relay may be used in two systems.

For example, the drive device 1 may be used for purposes other than the electric power steering device 100. In addition, the above-described embodiments or modifications may be combined as appropriate.

### Reference Signs List

1 Drive device
2 Control unit
3a Inverter circuit
3b Second inverter circuit
4 Motor
10 CPU
11 FET driver circuit (pre-driver)
12 Input circuit
13 Power supply circuit
14 Rotation sensor
15 Second FET driver circuit (second pre-driver)
20 Wiring board
22au, 22av, 22aw Current supply hole (first power supply hole)
22bu, 22bv, 22bw Second current supply hole
31au, 31av, 31aw Upper arm-side switching element (switching element)
32au, 32av, 32aw Lower arm-side switching element (switching element)
31bu, 31bv, 31bw Second upper arm-side switching element (second switching element)
32bu, 32bv, 32bw Second lower arm-side switching element (second switching element)
41 Stator
42 Rotor
43 Rotary shaft
Ua, Va, Wa Winding (first winding)
Ub, Vb, Wb Second winding

## Claims

1. A drive device comprising:
a motor including a rotary shaft, a rotor fixed to the rotary shaft, and a winding configured to rotate the rotor around a motor axis by a current flowing through the winding; and
a control unit attached to the motor and configured to control a current to be supplied to the winding,
wherein the control unit includes
an inverter circuit including a plurality of switching elements and configured to supply a current to the winding,
a rotation sensor configured to determine a rotation angle of the rotary shaft, and
a wiring board on which the inverter circuit and the rotation sensor are mounted, and
in a planar view, the rotation sensor is disposed in a position overlapping the motor axis and the plurality of switching elements are disposed along an outer peripheral edge of the wiring board.

2. The drive device according to claim 1,
wherein the control unit further includes
a pre-driver configured to output a signal to drive the inverter circuit,
an input circuit to which a signal is input from an outside,
a CPU configured to control the pre-driver based on a signal from the input circuit, and
a power supply circuit configured to supply a power supply voltage to the pre-driver, the input circuit, and the CPU, and
the pre-driver, the input circuit, the CPU, and the power supply circuit are mounted on the wiring board.

3. The drive device according to claim 1 or 2,
wherein the control unit further includes
a second inverter circuit including a plurality of second switching elements and configured to supply a current to the motor through a route different from the inverter circuit, and
in a planar view, the plurality of second switching elements are disposed along the outer peripheral edge of the wiring board.

4. The drive device according to claim 3,
wherein the winding includes first three-phase windings to which the current is supplied from the inverter circuit, and second three-phase windings to which the current is supplied from the second inverter circuit,
the wiring board includes first current supply holes in three phases electrically connected to the first three-phase windings, and second current supply holes in three phases electrically connected to the second three-phase windings, and
in a planar view, the first current supply holes in three phases and the second current supply holes in three phases are provided such that a first current supply hole of the first current supply holes and a second current supply hole of the second current supply holes in a corresponding phase are disposed to be point symmetrical with respect to the motor axis.

5. The drive device according to claim 4,
wherein, in a planar view, the first current supply holes in three phases and the second current supply holes in three phases are disposed along the outer peripheral edge of the wiring board.

6. The drive device according to claim 5,
wherein the control unit further includes
a pre-driver configured to output a signal to drive the inverter circuit,
a second pre-driver configured to output a signal to drive the second inverter circuit,
an input circuit to which a signal is input from an outside,
a CPU configured to control the pre-driver and the second pre-driver based on a signal from the input circuit, and
a power supply circuit configured to supply a power supply voltage to the rotation sensor, the pre-driver, the second pre-driver, the input circuit, and the CPU,
the pre-driver, the second pre-driver, the input circuit, the CPU, and the power supply circuit are mounted on the wiring board, and
in a planar view, the pre-driver, the second pre-driver, the input circuit, the CPU, and the power supply circuit are disposed in a region surrounded by the plurality of switching elements, the first current supply holes in three phases, the plurality of second switching elements, and the second current supply holes in three phases.

7. An electric power steering device comprising:
the drive device according to any one of claims 1 to 6.
